# EUROPÄISCHE PATENTANMELDUNG

(11) **EP 2 987 966 A1**
(43) Veröffentlichungstag der Anmeldung: **24.02.2016**
(21) Anmeldenummer: 14181724.7
(22) Anmeldetag: 21.08.2014
(51) Int. Cl.: F01D 25/14, F01D 19/00

(54) **Gasturbine mit in Ringsektoren unterteiltem Kühlringkanal**

(71) Anmelder: Siemens Aktiengesellschaft, 80333 München (DE)
(72) Erfinder: Hüning, Marcus, 45478 Mülheim an der Ruhr (DE); Goßmann, Otmar, 51766 Engelskirchen (DE); Kahlstorf, Uwe, 45478 Mülheim a.d. Ruhr (DE)

(57) **Zusammenfassung**

Die Erfindung betrifft eine Gasturbine (1) mit mindestens einem inneren Gehäuseteil (2) und mindestens einem äußeren Gehäuseteil (3), zwischen welchen beiden Gehäuseteilen (2, 3) wenigstens teilweise ein Ringkanal (4) angeordnet ist, der den bei Betrieb der Gasturbine (1) vorherrschende Nutzstrom des Arbeitsfluids (5) und den Gasturbinenläufer (6) umfänglich umgibt, wobei der Ringkanal (4) dazu ausgebildet ist, ein Kühlfluid (8), insbesondere Verdichterluft, zu leiten, wobei der Ringkanal (4) in Umfangsrichtung durch Abtrennungen (7) in Ringsektoren (10) unterteilt ist.

## Beschreibung

Die vorliegende Erfindung betrifft eine Gasturbine mit mindestens einem inneren Gehäuseteil und mindestens einem äußeren Gehäuseteil, zwischen welchen beiden Gehäuseteilen wenigstens teilweise ein Ringkanal angeordnet ist, der den bei Betrieb der Gasturbine vorherrschenden Nutzstrom des Arbeitsfluids und den Gasturbinenläufer umgibt, wobei der Ringkanal dazu ausgebildet ist, ein Kühlfluid, insbesondere Verdichterluft zu leiten.

Derartige Gasturbinen sind typischerweise als stationäre Gasturbinen aber auch als Flugzeugtriebwerke ausgebildet, welche metallische Gehäuseteile aufweisen, die eine große Wärmekapazität und damit auch ein hohes Wärmespeichervermögen haben. In den Gehäuseteilen sind typischerweise Abführöffnungen vorgesehen, welche dazu ausgebildet sind, das Kühlfluid aus dem Ringkanal zu weiteren Kühl- und Dichtaufgaben an weitere fluidtechnisch angeschlossene Abschnitte der Gasturbine zu leiten. Fernerhin dient das Kühlfluid natürlich auch zur Wärmekonditionierung, d.h. zur Kühlung der Bauteile, die den Ringkanal begrenzen.

Je nach Betriebsbedingung der Gasturbine ist es erforderlich, den Ringkanal nur mit einer verhältnismäßig geringen Menge an Kühlfluid zu beschicken. Dies führt in Folge dazu, dass sich in dem Ringkanal freie Konvektionszellen ausbilden können, die aufgrund der Temperaturunterschiede innerhalb des Ringkanals ausgebildet werden. Die freien Konvektionszellen wiederum haben einen signifikanten Einfluss auf die Gesamtströmung in dem Ringkanal, so dass sich mitunter unerwünschte Asymmetrien in der Kühlfluidverteilung in dem Ringkanal ausbilden. Somit bilden sich innerhalb des Ringkanals verstärkt örtliche Bereiche aus, welche wärmer sind als andere Bereiche. Durch die Inhomogenität in der Temperaturverteilung kann aufgrund der unterschiedlichen Materialausdehnungen der einzelnen örtlichen Bereich die Geometrie der Gasturbine verzogen werden. Aufgrund dieses Verziehens kann ein Verlust der Achsensymmetrie der Gasturbine die Folge sein, wodurch die Spaltabstände zwischen den rotierenden und statischen Bauteilen der Gasturbine über den Querschnittsinnenumfang in Längsrichtung der Gasturbine unterschiedlich sind. So ist es bspw. bekannt, dass aufgrund der ungleichmäßigen Temperaturverteilung innerhalb der Gasturbine während des Startvorgangs eine Ovalisierung bzw. eine Verbiegung des gesamten Gehäuses auftreten kann.

Zudem sorgt die konvektive Verteilung des Kühlfluids in dem Ringkanal für unterschiedliche Kühlfluidtemperaturen über den Umfang des Ringkanals. Damit ergeben sich aber auch variable Kühlfluidtemperaturen an denjenigen Abschnitten der Gasturbine, an welchen weitere Kühlfunktionen durch das Kühlfluid zu erbringen sind, so etwa bei der Turbinenschaufelkühlung, die aus dem Ringkanal gespeist wird. Als Folge kann es erforderlich sein, dass diese Abschnitte für einen erhöhten Kühlfluidverbrauch ausgelegt werden müssen, was es technisch zu vermeiden gilt.

Dementsprechend sind die Bauteile in der Gasturbine immer auf den ungünstigsten geometrischen Fall auszulegen, wodurch eine Wirkungsgradeinbuße bzw. Kostenerhöhung hinzunehmen ist.

Derartige Probleme werden typischerweise bei den meisten Gasturbinen vernachlässigt und die Wirkungsgradeinbußen bzw. Kostenerhöhung werden hingenommen. Insbesondere wird hingenommen, dass die Spaltabstände zwischen dem inneren Gehäuseteil und den rotierenden Bauteilen größer sind als sie sein könnten, nämlich dann, wenn die Gasturbine keiner Verzerrung bzw. keiner Verbiegung unterliegen würde.

Aus diesen Umständen ergibt sich eine technische Notwendigkeit, diese Nachteile aus dem Stand der Technik zu vermeiden. Aufgabe der vorliegenden Erfindung ist es also, genau dies zu tun. Insbesondere soll eine Gasturbine vorgeschlagen werden, welche eine gleichmäßigere Kühlung der inneren Gehäuseteile und vor allem des Ringkanals ermöglichen kann. Zudem soll eine Ausbildung von großen Bereichen des Ringkanals durchziehende freien Konvektionszellen vermieden werden.

Diese der Erfindung zugrundeliegenden Aufgaben werden gelöst durch eine Gasturbine gemäß Anspruch 1.

Insbesondere werden die der Erfindung zugrundeliegenden Aufgaben gelöst durch eine Gasturbine mit mindestens einem inneren Gehäuseteil und mindestens einem äußeren Gehäuseteil, zwischen welchen beiden Gehäuseteilen wenigstens teilweise ein Ringkanal angeordnet ist, der den bei Betrieb der Gasturbine vorherrschenden Nutzstrom des Arbeitsfluids und den Gasturbinenläufer umfänglich umgibt, wobei der Ringkanal dazu ausgebildet ist, ein Kühlfluid, insbesondere Verdichterluft, zu leiten, und wobei der Ringkanal in Umfangsrichtung durch Abtrennungen in Ringsektoren unterteilt ist.

Diese Unterteilung des Ringkanals ist im Sinne einer fluidtechnischen Unterteilung zu verstehen, welche einen freien, also ungehinderten Fluidaustausch zwischen den einzelnen Ringsektoren verhindern kann.

Der äußere Gehäuseteil einer Gasturbine begrenzt diese typischerweise zur Umgebung hin und verhindert den Austritt von Arbeitsfluid aus der Gasturbine bei Betrieb derselben in diese Umgebung. Der innere Gehäuseteil hingegen begrenzt die Gasturbine zum Heißgasstrom hin, welcher als Arbeitsfluid für die Umsetzung von thermischer Energie in mechanische Drehenergie genutzt wird. Der innere Gehäuseteil umgibt hierbei den Heißgasstrom sowie den Gasturbinenläufer wenigstens teilweise.

Der Ringkanal ist typischerweise als Sekundärfluidplenum ausgebildet, in welchen Sekundärfluid bzw. Kühlfluid bevorratet und geleitet werden kann. Bevorzugt ist das Kühlfluid Verdichterluft, kann aber auch ein anderes Fluid sein, welches entsprechend verdichtet wurde. Derartige Fluide sind bspw. Luft-Wasser-Mischungen oder auch Luft-Dampf-Mischungen.

Erfindungsgemäß ist vorgesehen, dass der zwischen dem inneren und äußeren Gehäuseteil angeordnete Ringkanal fluidtechnisch unterteilt ist, so dass einzelne Ringsektoren ausgebildet sind. Diese fluidtechnische Unterteilung vermag die Ausbildung von freien Konvektionszellen über den ganzen Ringkanal hinweg zu unterdrücken oder sogar zu verhindern. Infolgedessen kann auch der Effekt von freien Konvektionszellen auf die anderenfalls in dem Ringkanal vorherrschende Kühlfluidströmung vermindert werden. In anderen Worten ist der Einfluss der freien Konvektionszellen in dem Ringkanal geringer auf die in dem Ringkanal vorherrschende Kühlfluidströmung als ohne Unterteilung.

Weiterhin können sich in den einzelnen Ringsektoren lokale freie Konvektionszellen ausbilden, die eine schnellere Durchmischung des Kühlfluids gewährleisten können. Ebenfalls kann das Kühlfluid und damit die Kühlleistung des Kühlfluids schneller im Bereich der einzelnen Ringsektoren deponiert werden, so dass eine effizientere Kühlung durch das Kühlfluid die Folge ist. Durch die Ringsektoren wird also die durch die freie Konvektionszellen bestimmte Eigendynamik einer Temperaturschichtung lokal begrenzt, was zu einer verbesserten und gleichmäßigeren Temperaturverteilung über den Umfang des Ringkanals führt. Eine Ovalisierung bzw. Verbiegung aufgrund einer ungleichmäßigen Temperaturverteilung in Umfangsrichtung kann damit wenigstens im Bereich des Ringkanals deutlich vermindert werden.

Gemäß einer ersten besonders bevorzugten Ausführungsform der Erfindung ist vorgesehen, dass die Abtrennungen wenigstens einzelne, insbesondere alle benachbarte Ringsektoren fluiddicht voneinander trennen. Eine Temperaturübertragung durch freie Konvektionszellen, die über mehr als einen Ringsektor sich ausdehnen können, kann damit weitgehend verhindert werden. Insofern können die Temperaturschichtungen bzw. die Temperaturverteilung in einem einzelnen Ringkanal nochmals besser lokalisiert werden. Je nach Ausbildung der Ringsektoren, d.h. je nach Größe und Geometrie der Ringsektoren, kann so auf die sich einstellende Temperaturverteilung in Umfangsrichtung besonders vorteilhaft Einfluss genommen werden.

Alternativ oder auch in Weiterführung der Idee ist vorgesehen, dass wenigstens einige der Ringsektoren, insbesondere alle Ringsektoren mit einer eigenen Kühlfluidzuleitung versehen sind. Insbesondere wenn die einzelnen Ringsektoren fluiddicht gegeneinander getrennt sind, ist eine solche individuelle Kühlfluidzuleitung pro Ringsektor sehr vorteilhaft bzw. sogar erforderlich, um die Ringsektoren mit ausreichend Kühlfluid zu versorgen. Durch eine individuelle Kühlfluidzuleitung kann jeder Ringsektor auch unabhängig von den anderen Ringsektoren mit Kühlfluid versorgt werden, wobei insbesondere Ringsektoren dann mit besonders viel Kühlfluid versorgt werden können, wenn diese in einem Bereich angeordnet sind, der während des Betriebs der Gasturbine besonders viel Kühlleistung nachfragt.

Gemäß einer weiteren, sehr vorteilhaften Ausführungsform der Erfindung ist vorgesehen, dass wenigstens einzelne Abtrennungen, insbesondere alle Abtrennungen Durchgänge mit jeweils einem Querschnitt Q aufweisen. Die Abmessung eines Querschnitts betrifft hierbei eine durchschnittliche Abmessung, welche etwa als gemittelter Durchmesser berechnet werden kann. Insbesondere kann sich die Abmessung aber auch auf eine Maximalabmessung in der Querschnittsebene beziehen, etwa den Maximaldurchmesser. Durch das Vorsehen von Durchgängen in den Abtrennungen kann teilweise Kühlfluid zwischen den Ringsektoren ausgetauscht werden. Je nach Größe des Querschnitts der einzelnen Durchgänge kann so eine gezielte Überführung von Kühlfluid zwischen den einzelnen Ringsektoren erreicht werden. Hierbei müssen die einzelnen Abtrennungen der Ringsektoren nicht jeweils Durchgänge gleicher Querschnittsgröße aufweisen. Vielmehr können die einzelnen Abtrennungen unterschiedlich große Durchgänge aufweisen, so dass je nach Ort des Ringsektors in dem Ringkanal eine größere bzw. kleinere Fluidaustauschmenge mit den benachbarten Ringsektoren ausgetauscht werden kann.

Gemäß einer besonders bevorzugten Ausführungsform der Erfindung ist vorgesehen, dass wenigstens einzelne Abtrennungen, bevorzugt alle Abtrennungen als Trennbleche ausgebildet sind. Die Trennbleche werden typischerweise auch als Schottbleche bezeichnet. Da innerhalb des Ringkanals typischerweise keine großen Druckdifferenzen vorherrschen bzw. zwischen den einzelnen Ringsektoren auch eine solche nicht eingestellt werden soll, können die Abtrennungen verhältnismäßig dünnwandig ausgebildet sein. Dies wiederum erlaubt die Unterteilung des Ringkanals in Ringsektoren mithilfe einfacher und kostengünstiger Bauteile.

Gemäß einer weiteren Ausführung der Erfindung ist vorgesehen, dass die Ringsektoren in Umfangsrichtung des Ringkanals im Wesentlichen gleich lang dimensioniert sind. Gemäß dieser Ausführungsform wird die Kühlfluidverteilung in den einzelnen Ringsektoren verhältnismäßig vergleichbar erfolgen. Zudem ist es im Normalfall nicht erforderlich, die einzelnen Ringsektoren hinsichtlich ihrer Kühlfluidzuleitung spezifisch anzupassen. Bei verhältnismäßig hohen Fluidströmen kann so auch eine schnelle Vergleichmäßigung der Kühlfluidverteilung über den Ringkanal erreicht werden.

Gemäß einer weiteren bevorzugten Ausführungsform der Erfindung ist vorgesehen, dass in Umfangsrichtung des Ringkanals eine gerade Anzahl an Ringsektoren vorgesehen ist. Insbesondere sind es zwei, vier, sechs oder acht Ringsektoren. Diese Unterteilung erlaubt die Unterteilung des Ringkanals in Ringsektoren, die symmetrisch zueinander angeordnet sein können. Dies erlaubt wiederum eine verbesserte Vergleichmäßigung der Temperaturverteilung innerhalb der vier bzw. acht Ringsektoren.

Gemäß einer weiteren Ausführungsform der Erfindung ist vorgesehen, dass wenigstens eine Abtrennung im Bereich des oberen Scheitels des Ringkanals vorgesehen ist und/oder wenigstens eine Abtrennung im Bereich des unteren Scheitels des Ringkanals vorgesehen ist. Der obere Scheitel betrifft hierbei bei Aufstellung der Gasturbine den örtlich höchsten Punkt des Ringkanals, wobei der untere Scheitel den untersten Punkt betrifft. Aufgrund der ausführungsgemäßen Unterteilung kann eine Ausdehnung der freien Konvektionszellen in den jeweils anderen Symmetriebereich verhindert werden. Aufgrund der symmetrischen Anordnung der Abtrennungen können die Ringsektoren weitgehend gleichmäßig mit Kühlfluid beschickt werden, wobei die Ausbildung der freien Konvektionszellen bzw. Kühlfluidströmung ebenfalls weitgehend vergleichbar ist, soweit die bezeichneten Abtrennungen die einzigen sind.

Entsprechend einer ebenfalls bevorzugten Ausführungsform ist vorgesehen, dass wenigstens zwei Abtrennungen vorgesehen sind, welche in Umfangsrichtung des Ringkanals einander gegenüberliegend angeordnet sind und insbesondere um betragsmäßig 85° bis 95° (also etwa um n/2) gegenüber dem oberen Scheitel des Ringkanals gedreht angeordnet sind. Die Definition des oberen und unteren Scheitels soll entsprechend der vorher gehenden Ausführungsform verstanden werden.

Entsprechend einer weiteren Ausführungsform der Erfindung kann vorgesehen sein, dass in dem Ringkanal wenigstens teilweise ein Rohr vorgesehen ist, welches einzelne Ringsektoren fluidtechnisch miteinander verbindet. Diese fluidtechnische Verbindung kann den fluidtechnischen Austausch zwischen einzelnen Ringsektoren begünstigen. So kann bspw. auch gezielt Kühlfluid und damit Wärme zwischen den einzelnen Ringsektoren ausgetauscht werden. Dies erweist sich insbesondere dann als vorteilhaft, wenn während des Betriebs der Gasturbine einzelne Ringsektoren höhere Kühlleistung nachfragen als andere. In solchen Fällen kann etwa Kühlfluid aus anderen Ringsektoren in einen betreffenden Ringsektor überströmen. Gleichzeitig ist es auch möglich, dass aus den wärmeren Ringsektoren bei gleicher Kühlfluidmenge in den einzelnen Ringsektoren aufgrund des dort vorherrschenden höheren Drucks Kühlfluid in die benachbarten Ringsektoren abfließt.

Gemäß einer Weiterführung dieser Idee ist vorgesehen, dass das Rohr als Verteilrohr ausgebildet ist, welches mit wenigstens einer Kühlfluidleitung zur Kühlfluidzuführung fluidtechnisch verbunden ist und wenigstens eine, bevorzugt eine Vielzahl von Auslassöffnungen aufweist, welche zur Überführung des Kühlfluids aus dem Rohr in die Ringsektoren ausgebildet ist. Insbesondere verläuft das Rohr um den gesamten Umfang des Ringkanals und verteilt das Kühlfluid in allen Ringsektoren. Das Rohr ermöglicht somit eine vergleichmäßigte Verteilung und Beschickung der Ringsektoren mit Kühlfluid und trägt insofern wiederum zu einer Vergleichmäßigung der Temperaturverteilung über die einzelnen Ringsektoren in dem Ringkanal hinweg bei.

Nachfolgend soll die Erfindung anhand einzelner Figuren im Detail beschrieben werden. Hierbei ist darauf hinzuweisen, dass die Figuren lediglich schematisch zu verstehen sind und eine Einschränkung der Ausführbarkeit aufgrund dieser Darstellung nicht gegeben ist.

Weiter soll darauf hingewiesen werden, dass alle technischen Merkmale mit gleichen Bezugszeichen gleiche technische Wirkung aufweisen.

Fernerhin sei darauf hingewiesen, dass alle beliebigen Kombinationen der nachfolgend dargestellten technischen Merkmale vorliegend beansprucht werden, soweit diese Kombinationen in der Lage sind, die erfindungsgemäßen Aufgaben zu lösen.

Hierbei zeigen:
- Figur 1: eine seitliche Schnittansicht in Längsrichtung durch eine Gasturbine gemäß dem Stand der Technik;
- Figur 2: eine Querschnittansicht durch einen Ringkanal in Längsrichtung entlang einer Gasturbine, wie sie aus dem Stand der Technik bekannt ist;
- Figur 3: eine seitliche Schnittansicht in Längsrichtung durch eine erste Ausführungsform einer erfindungsgemäßen Gasturbine;
- Figur 4: eine Querschnittsansicht durch einen Ringkanal in Längsrichtung entlang einer Gasturbine gemäß einer weiteren Ausführungsform der Erfindung;
- Figur 5: eine Querschnittsansicht durch einen Ringkanal in Längsrichtung entlang einer Gasturbine gemäß einer weiteren Ausführungsform der Erfindung;
- Figur 6: eine seitliche Schnittansicht in Längsrichtung durch eine weitere Ausführungsform einer erfindungsgemäßen Gasturbine.

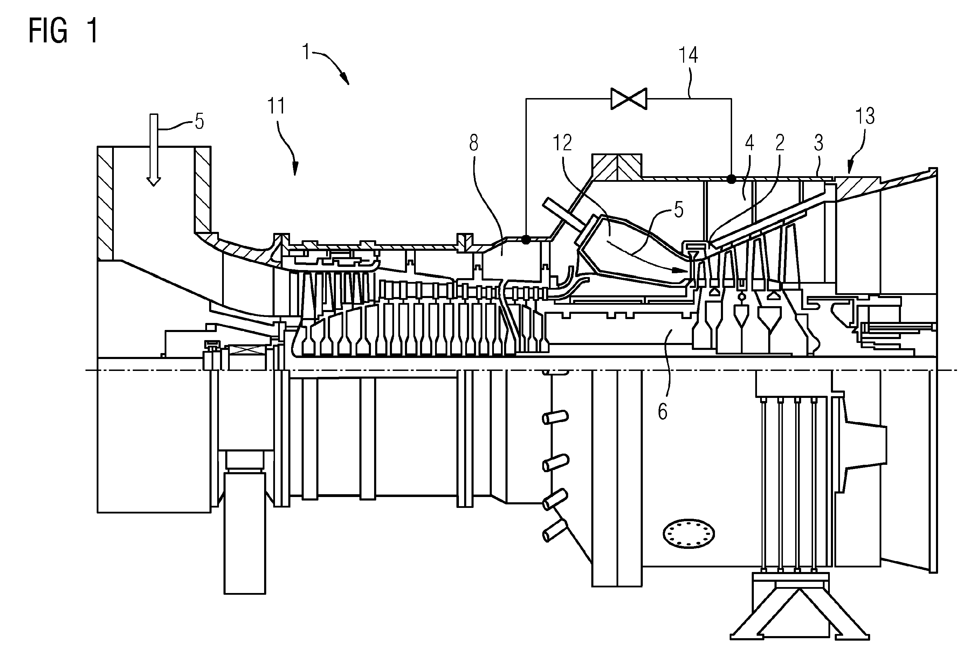

Figur 1 zeigt eine seitliche Schnittansicht in Längsrichtung durch eine Ausführungsform einer Gasturbine, wie sie aus dem Stand der Technik bekannt ist. Hierbei weist die Gasturbine einen Verdichter 11 auf, welcher Arbeitsfluid 5, vorliegend also Luft bei Betrieb ansaugt und verdichtet. Das verdichtete Arbeitsfluid 5 wird zum Großteil der Brennkammer 12 zur Verbrennung zugeführt, wobei jedoch ein geringer Anteil an verdichtetem Arbeitsfluid 5 im Sinne eines Kühlfluids 8 einen nicht weiter mit Bezugszeichen versehenem Plenum zugeführt wird, aus welchem über eine Sekundärfluidleitung 14 dieses Kühlfluid 8 einem Ringkanal 4 zugeleitet wird. Der Ringkanal 4 ist zur Umgebung hin durch ein äußeres Gehäuseteil 3 sowie nach innen zum Gasturbinenläufer 6 durch ein inneres Gehäuseteil 2 begrenzt. In Längsrichtung der Gasturbine sind zudem weitere Bauteile vorgesehen, die einen fluidtechnisch abgegrenzten Ringkanal 4 ausbilden.

Bei Betrieb der Gasturbine wird folglich in den Ringkanal 4 Arbeitsfluid eingebracht, welches je nach Betriebszustand eine größere oder kleinere Strömung in dem Ringkanal ausbilden lässt. Aus dem Ringkanal wird bspw. das Kühlfluid für weitere Kühlungen bzw. für Dichtungszwecke entnommen. Je nach Betriebszustand der Gasturbine 1 werden jedoch die Bauteile, welche den Ringkanal 4 begrenzen, mehr oder minder erwärmt. Ebenfalls können diejenigen Bauteile mehr oder minder erwärmt werden, die mittels des aus dem Ringkanal 4 abgeführten Kühlfluids 8 versorgt und gekühlt werden. In beiden Fällen steht eine ungleichmäßige Kühlwirkung wie auch eine Verbiegung bzw. Ovalisierung der Gasturbine zu befürchten, wodurch Wirkungsgrad wie weiter oben bereits erklärt eingebüßt wird.

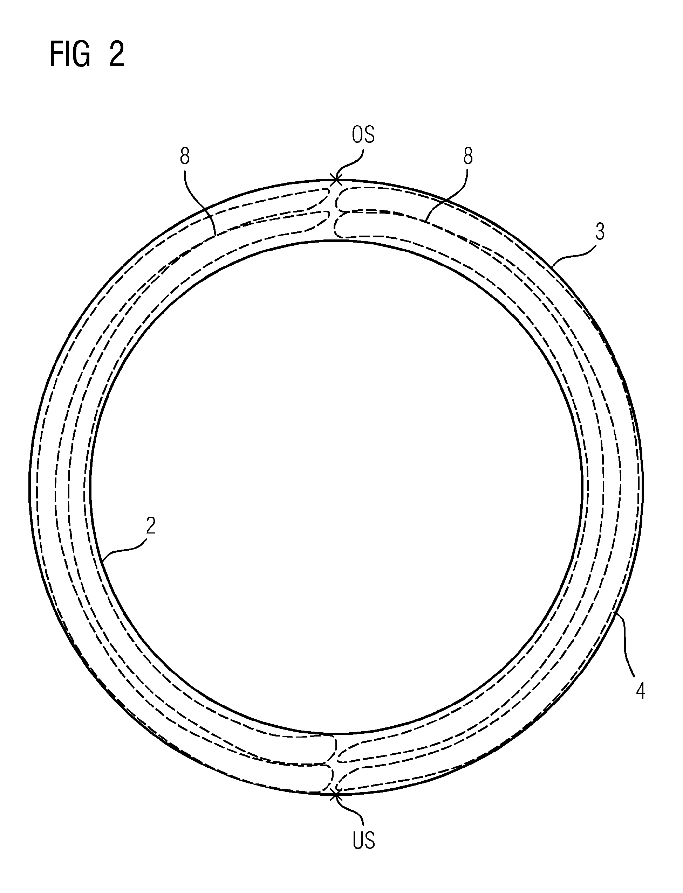

Aufgrund der ungleichmäßigen Aufheizung, wie auch mitunter aufgrund eine nicht ausreichend großen Menge an in den Ringkanal 4 eingebrachten Kühlfluids 8 können sich in dem Ringkanal 4, wie in Figur 2 gezeigt, verhältnismäßig große freie Konvektionszellen an Kühlfluid 8 ausbilden. Diese sind vorliegend gestrichelt dargestellt. Hierbei reicht eine freie Konvektionszelle von einem unteren Scheitelpunkt US des Ringkanals 4 bis zu einem oberen Scheitelpunkt OS und beeinträchtigt damit den ganzen Fluidstrom an Kühlfluid 8 in dem Ringkanal 4. Infolge der Ausbildung der freien Konvektionszellen kommt es zudem noch zu einer unvorteilhaften Temperaturverteilung innerhalb des Ringkanals vor allem dann, wenn nur eine geringe Kühlfluidmenge 8 in dem Ringkanal 4 vorliegt. Aufgrund der durch die freien Konvektionszellen hervorgerufenen Strömungsbeeinflussungen werden mitunter nicht alle Bereiche ausreichend mit einem Kühlfluid 4 vergleichbarer thermischer Konditionierung versorgt. Ebenso kann Kühlfluid 8 aus dem Ringkanal an vorbestimmten Stellen (vorliegend nicht gezeigt) entnommen werden, welches hinsichtlich seiner Temperatur über den Umfangswinkel variieren kann. Dies Alles gilt es zu vermeiden.

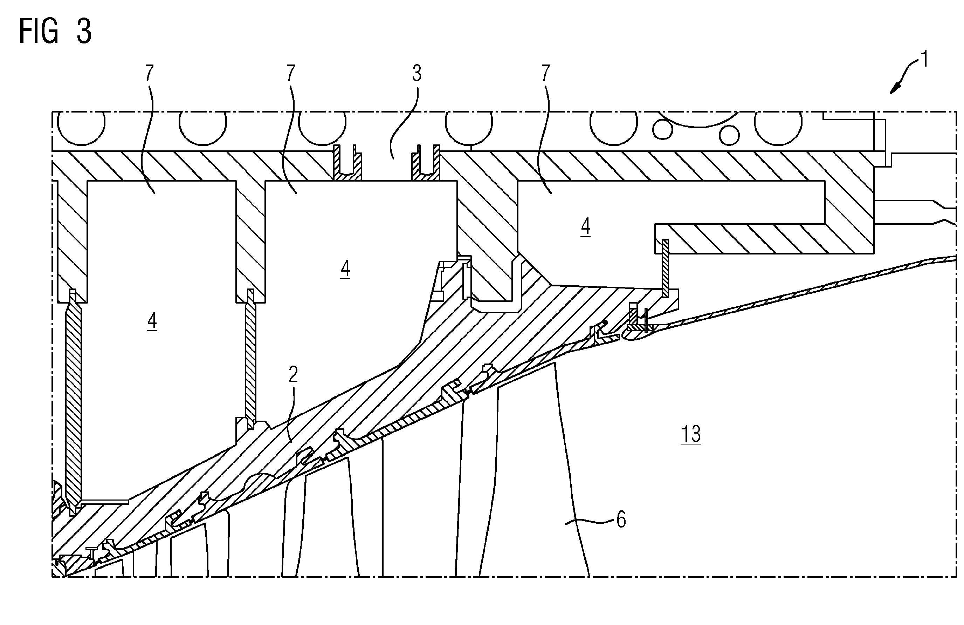

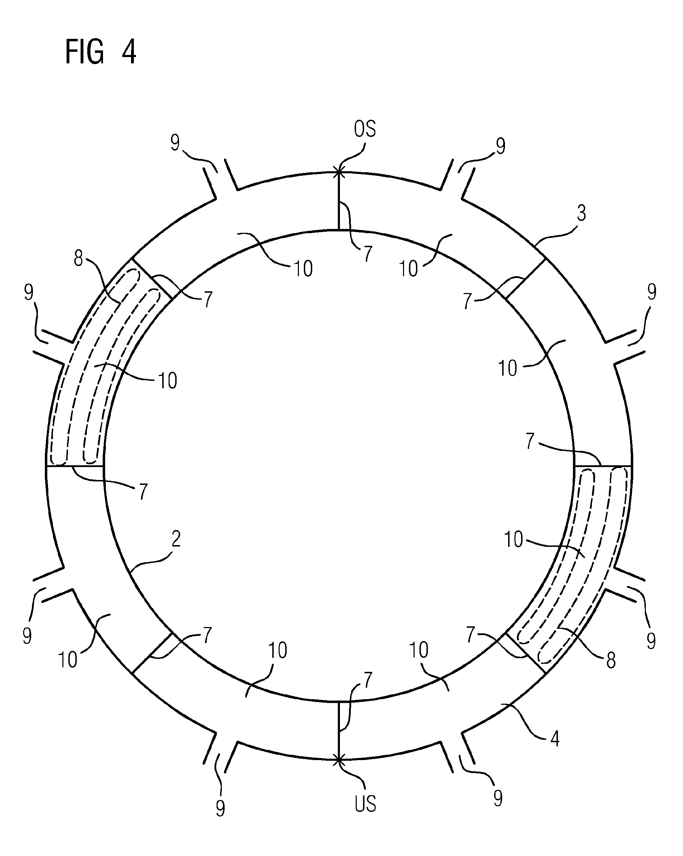

Dies kann bspw. durch die in Figur 3 gezeigte Ausführungsform der Erfindung erreicht werden. Hierbei zeigt Figur 3 in Längsrichtung der Gasturbine 1 eine Detailschnittansicht durch insgesamt drei Ringkanäle 4, welche jeweils durch eine Abtrennung 7 unterteilt sind. Die Abtrennungen 7 definieren nicht weiter mit Bezugszeichen dargestellte Ringsektoren 10 (jeweils einen aus der Papierebene herauskommend, und jeweils einen hinter der Papierebene liegend, s.a. Fig. 4) und ermöglichen somit die Unterbrechung bzw. Verhinderung der Ausbildung von großen freien Konvektionszellen in dem Ringkanal 4. Die Ringsektoren 10 sind hierbei insbesondere durch das äußere Gehäuseteil 3 zur Umgebung hin bzw. das innere Gehäuseteil 2 zu den drehenden Bauteilen der Entspannungsturbine 13 hin begrenzt. Da die inneren Gehäuseteile 2 aufgrund des in der Entspannungsturbine 13 entspannten Heißgasstroms schneller erwärmt werden, sind diese Bauteile auch vermehrt mit Kühlfluid zu beaufschlagen.

Figur 4 zeigt eine weitere Ausführungsform eines erfindungsgemäßen Ringkanals 4 einer erfindungsgemäßen Gasturbine 1 in einer Querschnittansicht entlang der Längsrichtung der Gasturbine, welcher Ringkanal 4 durch Abtrennungen 7 jeweils gleichmäßig in einzelne Ringsektoren 10 unterteilt ist. Die einzelnen Ringsektoren 10 sind hierbei jeweils mit einer eigenen Kühlfluidzuleitung 9 versehen, über welche die einzelnen Ringsektoren mit Kühlfluid 8 versorgt werden können.

Auch in der vorliegend gezeigten Ausführungsform bilden sich einzelne freie Konvektionszellen an Kühlfluid 8 aus, welche jedoch auf die einzelnen Ringsektoren 10 beschränkt bleiben. Dadurch kann einerseits eine schnellere Durchmischung des Volumens des Ringsektors 10 erreicht werden, zudem kann eine schnellere Wärmeübertragung an das innere Gehäuseteil 2 erreicht werden, da in dem Ringsektor 10 die Strömung kleinerskalig ist. Aufgrund der Abtrennungen 7 kann so der Ringkanal 4 soweit unterteilt werden, dass weitgehend alle Bereiche verhältnismäßig gleichmäßig mit Kühlfluid versorgt werden können. Dies fördert eine gleichmäßige Temperaturverteilung insbesondere des inneren Gehäuseteils 2, wodurch eine Verziehung bzw. Ovalisierung der Gasturbine 1 weitgehend vermieden werden kann. Hierbei mag es erforderlich sein, die einzelnen Ringsektoren 10 mit jeweils unterschiedlichen Mengen an Kühlfluid 8 über die Kühlfluidzuleitungen 9 zu versorgen. Ebenso können unterschiedliche Mengen aus den jeweiligen Ringsektoren 10 wieder entnommen werden (vorliegend nicht gezeigt).

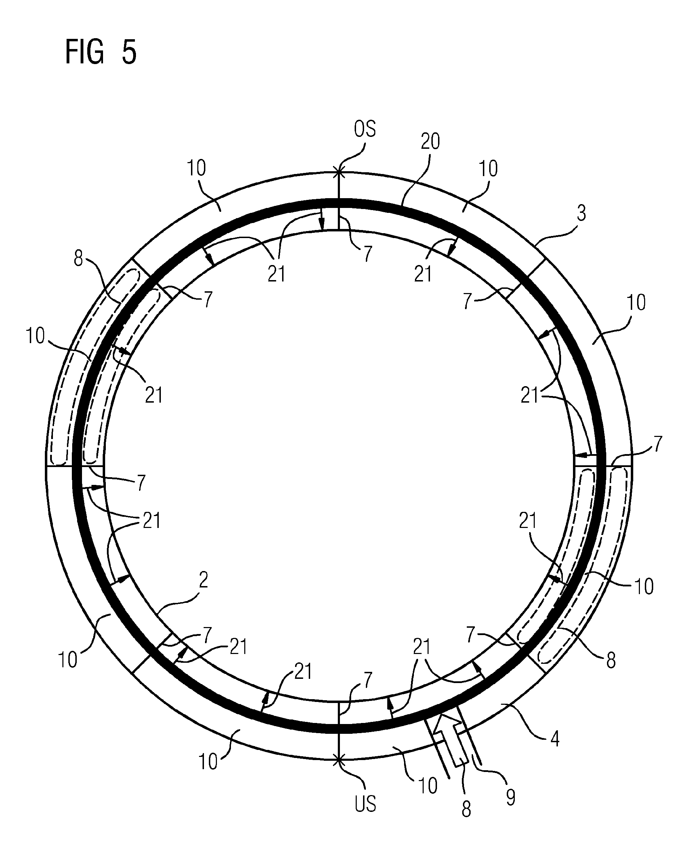

Figur 5 zeigt eine weitergehende Ausführungsform der Erfindung, welche sich von der in Figur 4 gezeigten dahingehend unterscheidet, dass zur weitergehenden Vergleichmäßigung der Kühlfluideinbringung in die einzelnen Ringsektoren 10 ein als Verteilrohr ausgebildetes Rohr 20 vorgesehen ist, welches sich durch alle Ringsektoren erstreckt und über Auslassöffnungen 21 das Kühlfluid aus dem Inneren des Rohres in die jeweils einzelnen Ringsektoren 10 überführt. Das als Verteilrohr ausgebildete Rohr 20 wird selbst über eine Kühlfluidzuleitung 9 mit Kühlfluid 8 beschickt. Aufgrund des verhältnismäßig kleineren Strömungsquerschnittes des Rohrs 20 kann eine besser orientierte Strömung in dem Rohr 20 ausgebildet werden als in dem Ringkanal 4. Dadurch verteilt sich das Kühlfluid 8 in dem Rohr 20 mitunter besser und schneller. Zudem kann der Druck in dem Rohr 20 im Vergleich zum Druck in den einzelnen Ringsektoren 10 erhöht sein, wodurch die Überführung an Kühlfluid 8 in die einzelnen Ringsektoren in erster Linie durch den Druckabfall bestimmt ist, und nicht durch mögliche freie Konvektionsphänomene in den einzelnen Ringsektoren 10.

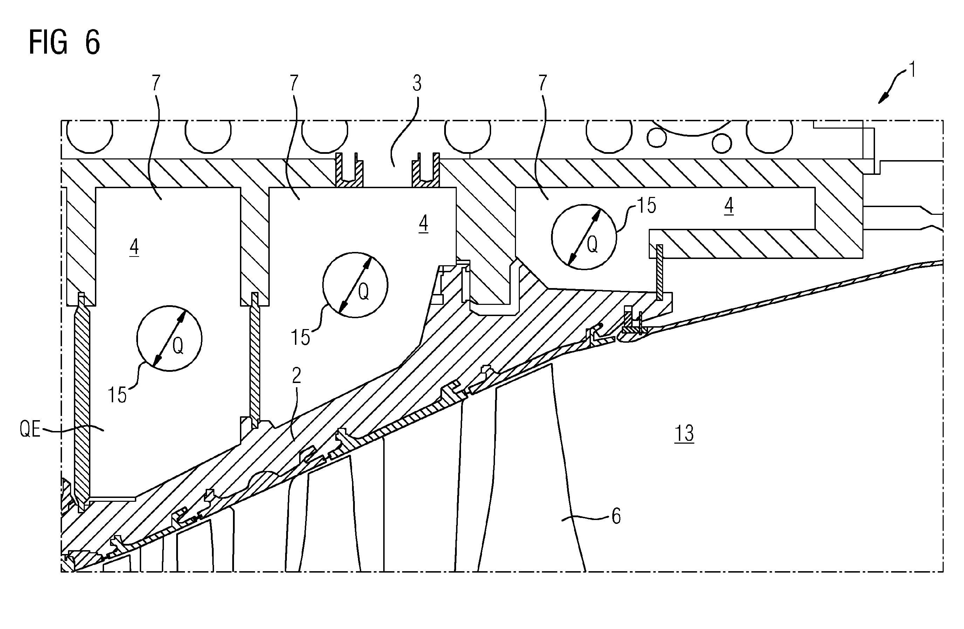

Gemäß einer weiteren Ausführungsform der Erfindung ist es denkbar, wie in Figur 6 dargestellt, die einzelnen Abtrennungen 7 der Ringkanäle 4 mit jeweils einem Durchgang 15 zu versehen. Der Durchgang 15 kann bspw. als Bohrung ausgeführt sein und weist einen Querschnittsdurchmesser Q in der Querschnittsebene QE auf, welche durch die flächige Ausdehnung der Abtrennung 7 definiert ist. Über die einzelnen Durchgänge 15 können die Ringkanäle 10 jeweils miteinander in Fluidkontakt stehen, so dass ein Kühlfluidaustausch bei Bedarf ermöglicht werden kann. Je nach Dimensionierung der Größe des Durchgangs 15 kann eine größere oder kleinere Menge an Kühlfluid zwischen den benachbarten Ringsektoren 10 ausgetauscht werden und so zu einer Vergleichmäßigung der Temperaturverteilung in dem jeweiligen Ringkanal 4 beitragen.

Weitere Ausführungsformen ergeben sich aus den Unteransprüchen.

## Patentansprüche

1. Gasturbine (1) mit mindestens einem inneren Gehäuseteil (2) und mindestens einem äußeren Gehäuseteil (3), zwischen welchen beiden Gehäuseteilen (2, 3) wenigstens teilweise ein Ringkanal (4) angeordnet ist, der den bei Betrieb der Gasturbine (1) vorherrschende Nutzstrom des Arbeitsfluids (5) und den Gasturbinenläufer (6) umfänglich umgibt, wobei der Ringkanal (4) dazu ausgebildet ist, ein Kühlfluid (8), insbesondere Verdichterluft, zu leiten,
**dadurch gekennzeichnet, dass** der Ringkanal (4) in Umfangsrichtung durch Abtrennungen (7) in Ringsektoren (10) unterteilt ist.

2. Gasturbine nach Anspruch 1,
**dadurch gekennzeichnet, dass** die Abtrennungen (7) wenigstens einzelne, insbesondere alle benachbarte Ringsektoren (10) fluiddicht voneinander trennen.

3. Gasturbine nach einem der vorhergehenden Ansprüche,
**dadurch gekennzeichnet, dass** wenigstens einige der Ringsektoren (10), insbesondere alle Ringsektoren (10) mit einer eigenen Kühlfluidzuleitung (9) versehen sind.

4. Gasturbine nach einem der vorhergehenden Ansprüche,
**dadurch gekennzeichnet, dass** wenigstens einzelne Abtrennungen (7), insbesondere alle Abtrennungen (7) Durchgänge (8) mit jeweils einem Querschnitt (Q) aufweisen.

5. Gasturbine nach einem der vorhergehenden Ansprüche,
**dadurch gekennzeichnet, dass** wenigstens einzelne Abtrennungen (7), bevorzugt alle Abtrennungen (7) als Trennbleche ausgebildet sind.

6. Gasturbine nach einem der vorhergehenden Ansprüche,
**dadurch gekennzeichnet, dass** die Ringsektoren (10) in Umfangsrichtung im Wesentlichen gleich lang dimensioniert sind.

7. Gasturbine nach einem der vorhergehenden Ansprüche,
**dadurch gekennzeichnet, dass** in Umfangsrichtung eine gerade Anzahl an Ringsektoren (10) vorgesehen ist.

8. Gasturbine nach einem der vorhergehenden Ansprüche,
**dadurch gekennzeichnet, dass** wenigstens eine Abtrennung (7) im Bereich des oberen Scheitels (OS) des Ringkanals (4) vorgesehen ist und/oder wenigstens eine Abtrennung (7) im Bereich des unteren Scheitels (US) des Ringkanals (4) vorgesehen ist.

9. Gasturbine nach einem der vorhergehenden Ansprüche,
**dadurch gekennzeichnet, dass** wenigstens zwei Abtrennungen (7) vorgesehen sind, welche in Umfangsrichtung des Ringkanals (4) einander gegenüber liegend angeordnet sind, und insbesondere um betragsmäßig 85° bis 95° gegenüber dem oberen Scheitel (S) des Ringkanals (4) gedreht angeordnet sind.

10. Gasturbine nach einem der vorher gehenden Ansprüche,
**dadurch gekennzeichnet, dass** in dem Ringkanal (4) wenigstens teilweise ein Rohr (20) vorgesehen ist, welches einzelne Ringsektoren (10) miteinander fluidtechnisch verbindet.

11. Gasturbine nach Anspruch 10,
**dadurch gekennzeichnet, dass** das Rohr (20) als Verteilrohr ausgebildet ist, welches mit wenigstens einer Kühlfluidzuleitung (9) zur Kühlfluidzuführung fluidtechnisch verbunden ist und wenigstens eine, bevorzugt eine Vielzahl von Auslassöffnungen (21) aufweist, welche zur Überführung des Kühlfluids (8) aus dem Rohr (20) in die Ringsektoren (10) ausgebildet ist.
